(19) Europäisches Patentamt / European Patent Office / Office européen des brevets

(11) **EP 2 228 542 B1**

(12) **EUROPÄISCHE PATENTSCHRIFT**

(45) Veröffentlichungstag und Bekanntmachung des Hinweises auf die Patenterteilung:
**16.05.2012 Patentblatt 2012/20**

(51) Int Cl.:
*F04D 29/68* (2006.01)  *F01D 5/14* (2006.01)
*F04D 27/02* (2006.01)

(21) Anmeldenummer: **10006370.0**

(22) Anmeldetag: **12.10.2004**

(54) **Strömungsarbeitsmaschine mit Fluidzufuhr zur Grenzschichtbeeinflussung**

Turbo compressor or pump with fluid injection to influence the boundary layer

Turbo compresseur ou pompe avec injection de fluide pour influencer la couche limite

(84) Benannte Vertragsstaaten:
**DE FR GB**

(30) Priorität: **26.11.2003 DE 10355241**

(43) Veröffentlichungstag der Anmeldung:
**15.09.2010 Patentblatt 2010/37**

(62) Dokumentnummer(n) der früheren Anmeldung(en) nach Art. 76 EPÜ:
**04024292.7 / 1 536 147**

(73) Patentinhaber: **Rolls-Royce Deutschland Ltd & Co KG**
**15827 Blankenfelde-Mahlow (DE)**

(72) Erfinder: **Gümmer, Volker, Dr.**
**15831 Mahlow (DE)**

(74) Vertreter: **Weber, Joachim**
**Hoefer & Partner**
**Patentanwälte**
**Pilgersheimer Strasse 20**
**81543 München (DE)**

(56) Entgegenhaltungen:
**EP-A- 1 118 747     FR-A- 1 263 010**
**FR-A- 1 318 602     GB-A- 843 979**
**US-A- 3 009 630     US-A- 3 934 410**

**Beschreibung**

Die vorliegende Erfindung bezieht sich auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es kann ein Gehäuse existieren, welches die Durchströmung des Rotors und des Stators mit einem Fluid nach außen begrenzt.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben- und Gehäusewänden begrenzt. Der Stand der Technik hält für dieses fundamentale Problem nur bedingt Lösungen bereit. Es existieren zahlreiche Konzepte zur Fluidzufuhr an Turbinenschaufeln, doch sind diese nicht auf Strömungsarbeitsmaschinen übertragbar, da sie im Wesentlichen der Oberflächenkühlung und nicht der Grenzschichtenergetisierung dienen. Aus Verdichtergitterexperimenten sind Konzepte bekannt, bei denen aus einer druckbeaufschlagten Kammer im Schaufelinnern Luft auf die Schaufelsaugseite ausgeblasen wird, um die zweidimensional beschaffene Profilgrenzschicht zu energetisieren. Verwandte Alternativlösungen sehen ein direktes Durchtreten des Fluides von der Schaufeldruckseite zur Schaufelsaugseite vor. Daneben existiert für Rotoren ein Konzept zur Luftzufuhr an Nabe und Gehäuse durch achsensymmetrisch angeordnete Schlitze, um die dortigen Wandgrenzschichten zu beeinflussen. Schließlich gibt es Veröffentlichungen von Forschungsinstitutionen, die Konzepte aufzeigen, bei denen Rotoren in Gehäusenähe aus einzelnen Düsen angeblasen werden, um die dortige Radialspaltströmung günstig zu beeinflussen. Der allgemeine Gedanke der Grenzschichtbeeinflussung durch Einblasung bzw. Fluidzufuhr ist somit im Stand der Technik enthalten, doch sind die bekannten Lösungen trivial und nur bedingt effektiv.

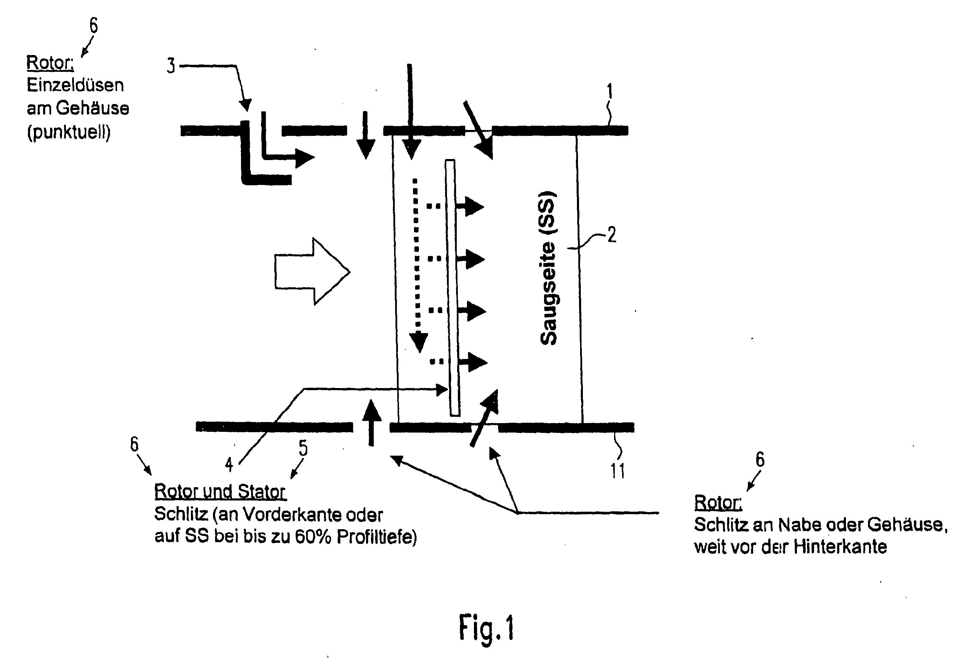

Die Fig.1 zeigt in schematischer Darstellung die aus dem Stand der Technik bekannten Lösungen. Gezeigt sind in schematischer Darstellung eine Nabe 11 und ein Gehäuse 1, zwischen welchen ein Fluid, wie durch den großen Pfeil dargestellt, von links anströmt. Weiterhin ist eine Schaufel 2 dargestellt, die entweder ein Rotor 6 oder Stator 5 sein kann und deren sichtbarer Bereich die Saugseite bildet. Wie durch die Pfeile angedeutet ist, existieren Entwürfe für eine lokale Luftzufuhr an unterschiedlichen Stellen der Strömungsarbeitsmaschine. Für Rotor- und Statorbeschaufelungen sowie ebene Experimentalschaufelgitter ist es bekannt, zwischen der Vorderkante und etwa 60% der Profiltiefe über Schlitze 4 Fluid auf die Schaufelsaugseite einzublasen, um die zweidimensional beschaffene Profilgrenzschicht zu beeinflussen. Das dazu notwendige Fluid tritt dabei aus einem hohlen, druckbeaufschlagten Innenraum der Schaufel 2 in den Hauptströmungspfad ein. Bei alternativen Lösungen ist das Schaufelprofil geteilt, um die Versorgung durch ein direktes Durchtreten des Fluides von der Schaufeldruckseite zur Schaufelsaugseite zu ermöglichen.

Für den Fall eines Rotors ist es bekannt, vor oder innerhalb des Bereichs der vorderen 50% der Profiltiefe durch einen achsensymmetrisch angeordneten Schlitz 3 Fluid an der Nabe 11 und/oder am Gehäuse 1 zuzuführen, um eine Beeinflussung der Wandgrenzschichten zu erreichen. Für Rotoren mit Gehäuseradialspalt existieren zudem Konzepte, die vorsehen, durch eine Anzahl von in den Strömungspfad vorstehenden Düsen 3 am Gehäuse Fluid punktuell einzublasen, um an diskreten Orten des Umfangs auf die Spaltströmung des Rotors Einfluss zu nehmen.

Eine hier nicht dargestellte Lösung sieht eine Entnahme auf der Schaufelsaugseite und ein Wiedereinströmen an anderer Stelle derselben Schaufel, nämlich der Schaufelspitze vor.

Der Stand der Technik beschreibt somit die folgenden Methoden einer Zufuhr von Fluid:

1.) durch gerade Schlitze im vorderen oder mittleren Bereich der Schaufelsaugseite an Rotoren und Statoren

2.) durch achsensymmetrische, flächenbündige Schlitze in Nabe und/oder Gehäuse weit vor der Schaufelhinterkante an Rotoren mit Gehäuseradialspalt

3.) durch eine Anzahl am Umfang verteilter, vorstehender Einzeldüsen am Gehäuse vor Rotoren mit Gehäuseradialspalt

Die meisten dieser Konzepte sind nur bedingt auf strömungstechnisch besonders problematische Zonen innerhalb der Schaufelpassage ausgerichtet oder orientieren sich an der einfachen Vorstellung einer zweidimensionalen Profilumströmung ohne die Berücksichtigung der komplizierten dreidimensionalen Strömungsvorgänge im Seitenwandbereich (nahe an Nabe und Gehäuse). Andere sind trotz ihrer Ausrichtung auf lokal kritische Strömungszonen von begrenzter Wirksamkeit.

Üblicherweise wird beim Stand der Technik Hilfsluft höheren Druckes von extern zugeführt. Ein Patent sieht eine Luftversorgung von Schlitzen einer weiter stromab gelegenen Stelle der Strömungsarbeitsmaschine vor.

Der oben beschriebene Stand der Technik ist schriftlich in nachfolgenden Veröffentlichungen dokumentiert:

US 5,690,473 (Turbine blade having transpiration strip cooling and method of manufacture)

US 6,334,753 (Streamlined bodies with counter-flow fluid injection)

US 2,870,957 (Compressors)

US 2,933,238 (Axial flow compressors incorporating boundary layer control)

US 5,480,284 (Self bleeding rotor blade)

Als nachteilig erweist sich beim Stand der Technik, dass die existierenden Lösungen keine hochwirksamen und insbesondere hinsichtlich des Wirkungsgrades der Strömungsarbeitsmaschine günstigen Lösungen bilden. Vielmehr sind die existierenden Einblasekonzepte vergleichsweise primitiv und sehen entweder die alleinige Einblasung auf der Schaufelsaugseite vor oder kombinieren dies mit einer Einblasung vor oder in der Schaufelreihe durch achsensymmetrische Ringschlitze an Nabe und/oder Gehäuse. Offensichtlich fehlen Konzepte zur gezielten Strömungsbeeinflussung im randnahen Bereich und zur radial (in Schaufelhöhenrichtung) variablen Beeinflussung der Profilgrenzschichten. Eine nicht achsensymmetrische Fluidzufuhr an den Seitenwänden vor oder innerhalb der beschaufelten Region oder auch an Schaufelspitzen im Laufspalt wird nicht in Betracht gezogen, obwohl die Beeinflussung der Seitenwandgrenzschichten am Ort der Problementstehung besonders ratsam ist. Diese gezielte Beeinflussung der dreidimensionalen Strömungsvorgänge im Bereich der Schaufelenden (und des damit verbundenen Strömungsaustausches in Schaufelhöhenrichtung) wird durch existierende Konzepte nicht berücksichtigt.

Die EP 1 118 747 A offenbart eine Schaufelkonstruktion, bei welcher von der Druckseite zur Saugseite eine Durchströmung erfolgt, ohne Fremdfluid zuzuführen. Es ergibt sich somit auf der Saugseite eine Fluidzufuhr, während auf der Druckseite eine Fluidentnahme erfolgt.

Die US 3 934 410 A zeigt eine Konstruktion, bei welcher ein symmetrisch ausgebildetes Profil angrenzend an die Hinterkante an der Saugseite und an der Druckseite jeweils einen geradlinigen Schlitz aufweist, durch welchen Fluid zugeführt wird.

Aus der FR 1 318 602 A ist es bekannt, mittels einer Vielzahl von Öffnungen alternierend zur Druckseite und zur Saugseite direkt angrenzend an die Hinterkante Fluid auszuleiten.

Die FR 1 263 010 A zeigt eine weitere Konstruktion, bei welcher entweder an der Saugseite oder an der Druckseite Fluid zuführbar ist.

Auch aus der US 3 009 630 A ist es vorbekannt, einseitig an der Druckseite hinterkantennah Fluid auszuleiten. Eine ähnliche Konstruktion zeigt die GB 843 979 A.

Der vorliegenden Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtbeeinflussung durch gezielte Fluidzufuhr sowie einen hohen Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Die erfindungsgemäße Strömungsarbeitsmaschine kann eine oder mehrere Stufen mit jeweils einem Rotor und einem Stator umfassen; in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor kann mit oder ohne Deckband am äußeren Schaufelende ausgeführt sein. Der erfindungsgemäße Stator besteht aus einer Anzahl feststehender Schaufeln, die nabenseitig wie gehäuseseitig mit festem oder freiem Schaufelende ausgeführt sein können.

Die erfindungsgemäß vorgesehene Rotortrommel und die Beschaufelung sind von einem Gehäuse umgeben.

Erfindungsgemäß kann die Strömungsarbeitsmaschine einen Stator vor dem ersten Rotor aufweisen, ein sogenanntes Vorleitrad.

Erfindungsgemäß kann mindestens ein Stator oder Vorleitrad abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Erfindungsgemäß kann die Strömungsarbeitsmaschine alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Zufuhr von Fluid an mindestens einer Schaufel einer Schaufelreihe des Rotors und/oder des Stators an aerodynamisch kritischen Orten auf hinterkanten- und randnahen Oberflächen (HRO) umfasst.

Zusätzlich zu Fluidzufuhrvorrichtungen an HRO weist die Strömungsarbeitsmaschine optional an mindestens einer Schaufel einer Rotor- oder Statorreihe Mittel zur Fluidzufuhr auf, die auf der Schaufelsaugseite in Meridianströmungsrichtung nicht punktuell, sondern über einen definierten Bereich verteilt angelegt sind, und deren Meridianerstreckung in meridianstromlinienorthogonaler Richtung zu wenigstens einer der Ringkanalwände (Nabe oder Gehäuse) hin abnimmt (saugseitige, intensitätsvariable Fluidzufuhr SIFZ).

Im Folgenden werden Beispiele von Fluidzufuhrvorrichtungen in Verbindung mit den Figuren beschrieben, wobei lediglich die Figuren 15-19 die Erfindung betreffen. Dabei zeigt:

Fig.1: eine schematische Darstellung des Standes der Technik

Fig.2: eine schematische Darstellung von Varianten des Grundkonzeptes

Fig.3: eine weitere schematische Darstellung von Vari- anten des Grundkonzeptes

Fig.4: verschiedene Varianten und Konfigurationen der erfindungsgemäßen Strömungsarbeitsmaschine

Fig.5: eine Darstellung zur Definiti- on des Begriffs HRO

Fig.6: eine Darstellung zur Definiti- on von HRO, Typen A und B

Fig.7: eine Darstellung zur Definiti- on von HRO, Typen C, D und E

Fig.8: eine weitere Darstellung zur Definition von HRO, Typen C, D und E

Fig.9 bis 11: unterschiedliche Ausgestaltungsformen von Kam- mern zur Zuführung des Fluids, vornehmlich vom Gehäuse aus

Fig.12 bis 14: Ausgestaltungsvarianten analog Fig.9 bis 11 mit Kammern zur Zuführung des Fluids, vornehmlich von der Nabe aus

Fig.15 bis 19: erfindungsgemäße Ausführungsvarianten einer Flu idzufuhrvorrichtung an Hinterkanten- und Randna hen Oberflächen (HRO) des Typs A

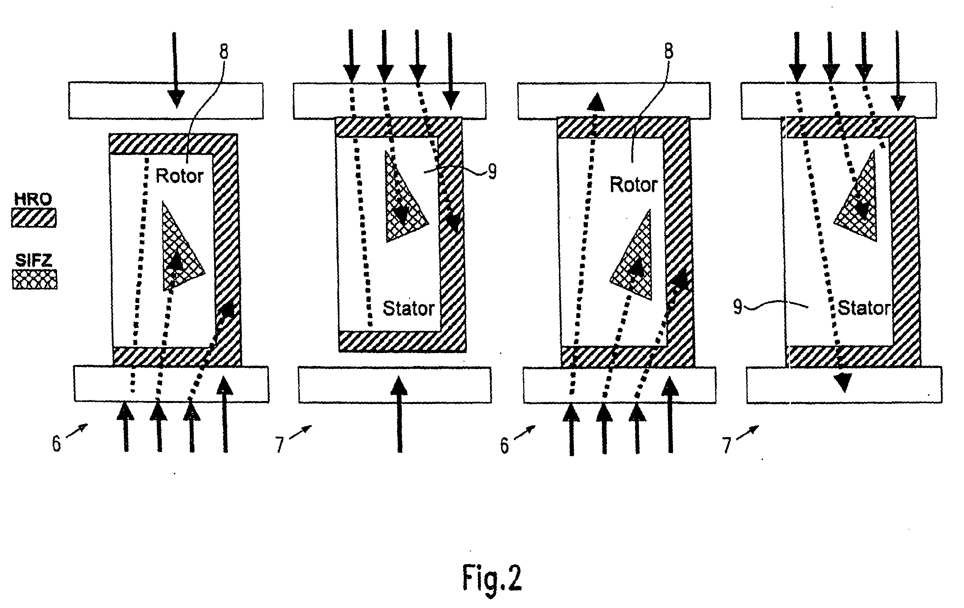

Die Fig. 2 zeigt in stark vereinfachter Darstellung Fluidzufuhrvorrichtungen an vier unterschiedlich konfigurierten Schaufelreihen, welche jeweils einen Rotor 6 beziehungsweise einen Stator 7 umfassen, die mit Rotorschaufeln 8 beziehungsweise Statorschaufeln 9 versehen sind. Mit dem Bezugszeichen 1 wird in stark vereinfachter Darstellung ein Gehäuse oder ein außenliegendes Deckband wiedergegeben. Das Bezugszeichen 11 kennzeichnet eine Rotortrommel oder ein innenliegendes Deckband. Die gewählte Ansicht der Schaufel kann sowohl die Saugseite als auch die Druckseite der Schaufel repräsentieren. Auf Rotoren und Statoren ist eine Zone für saugseitige intensitätsvariable Fluidzufuhr (SIFZ) vorgesehen.

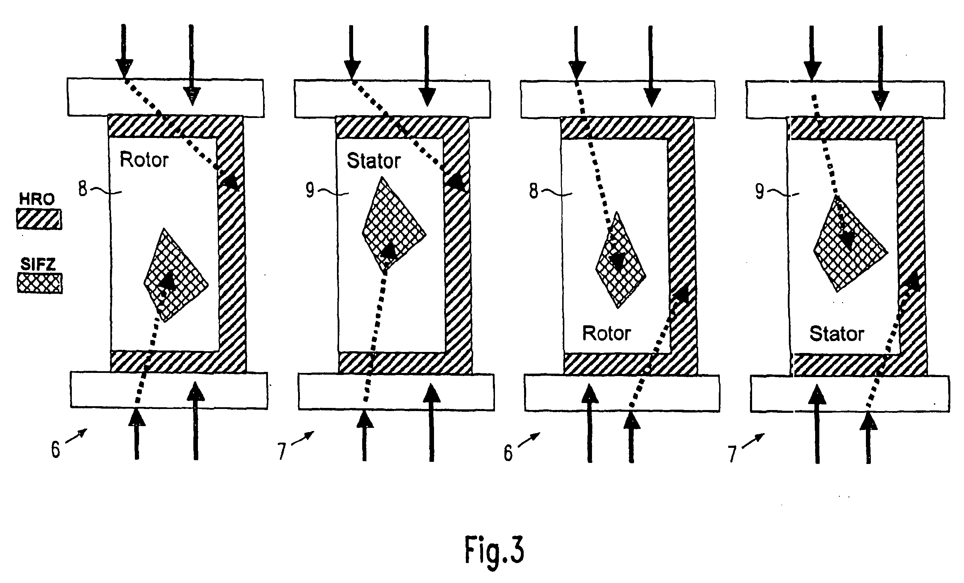

In analoger Weise zeigt Fig. 3 das Grundkonzept.

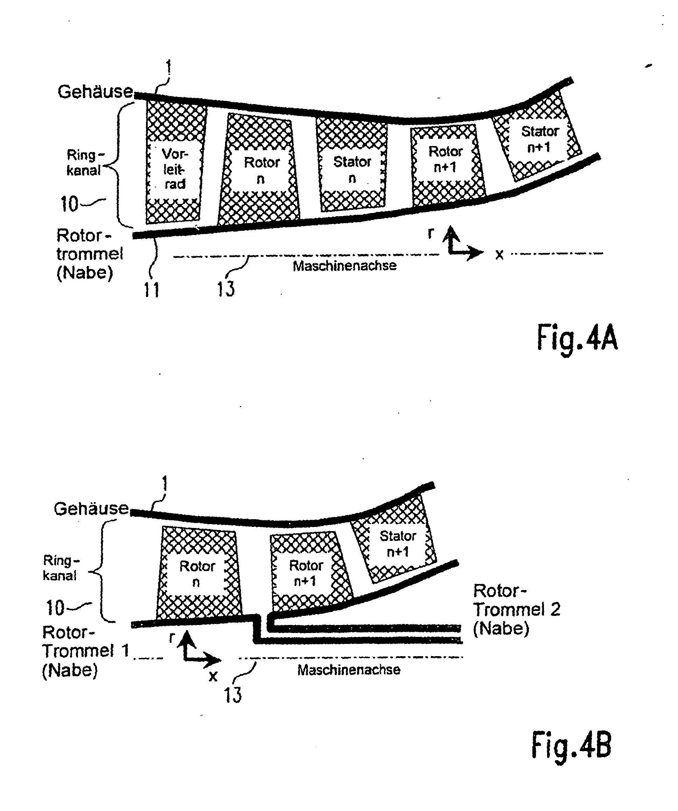

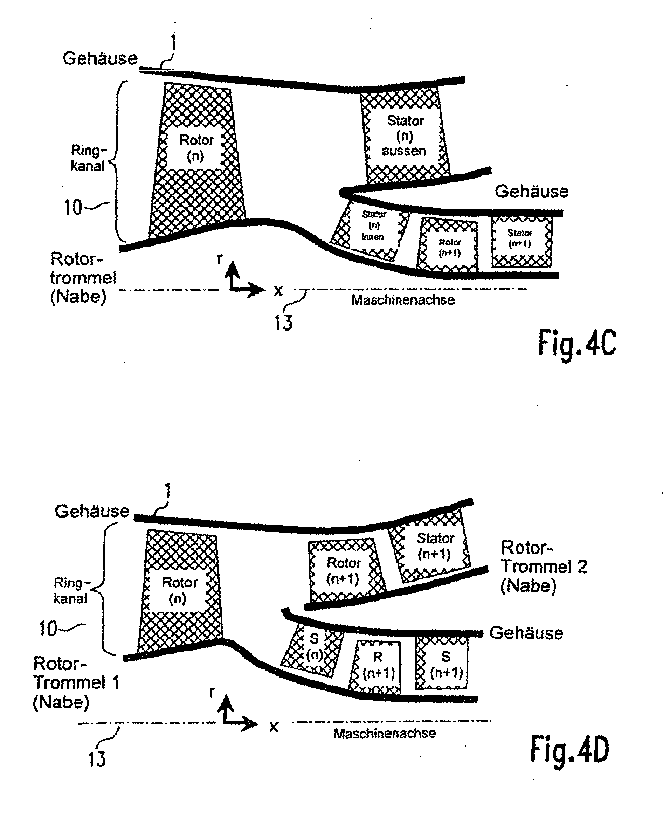

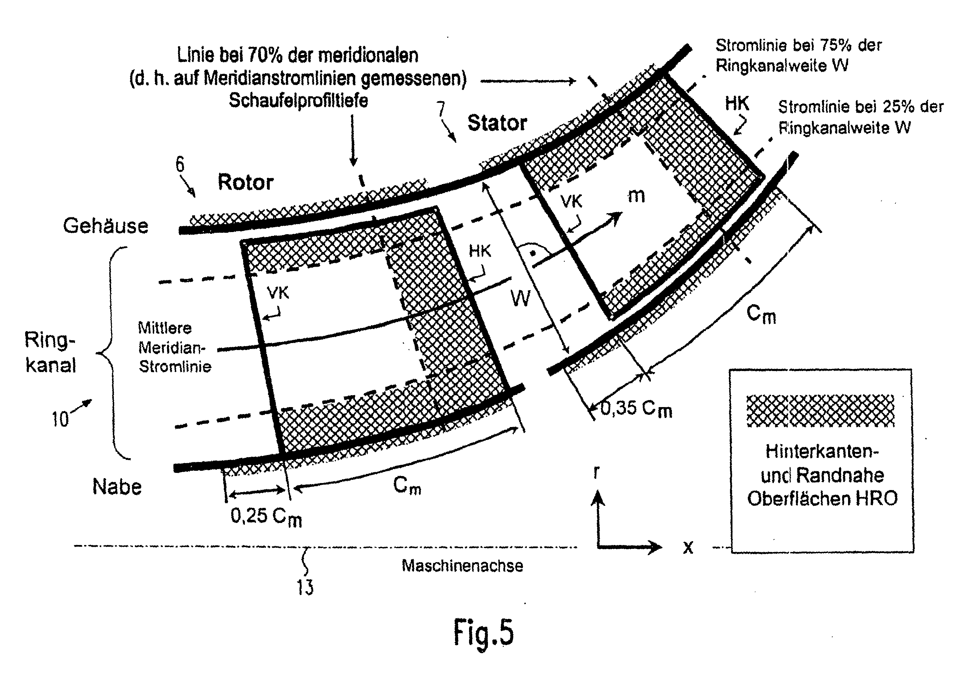

Die Fig. 4 zeigt vier verschiedene Konfigurationen der erfindungsgemäßen Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in Fig. 4B und 4D gezeigten Beispielen ist eine weitere Rotortrommel (Nabe) vorgesehen. Die Rotoren, Statoren sowie das Vorleitrad sind jeweils in Fig. 5 beschriftet, es ist jeweils in schematischer Weise eine Schaufel dargestellt.

Die Fig. 5 zeigt die Definition der Hinterkanten- und Randnahen Oberflächen (HRO). Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

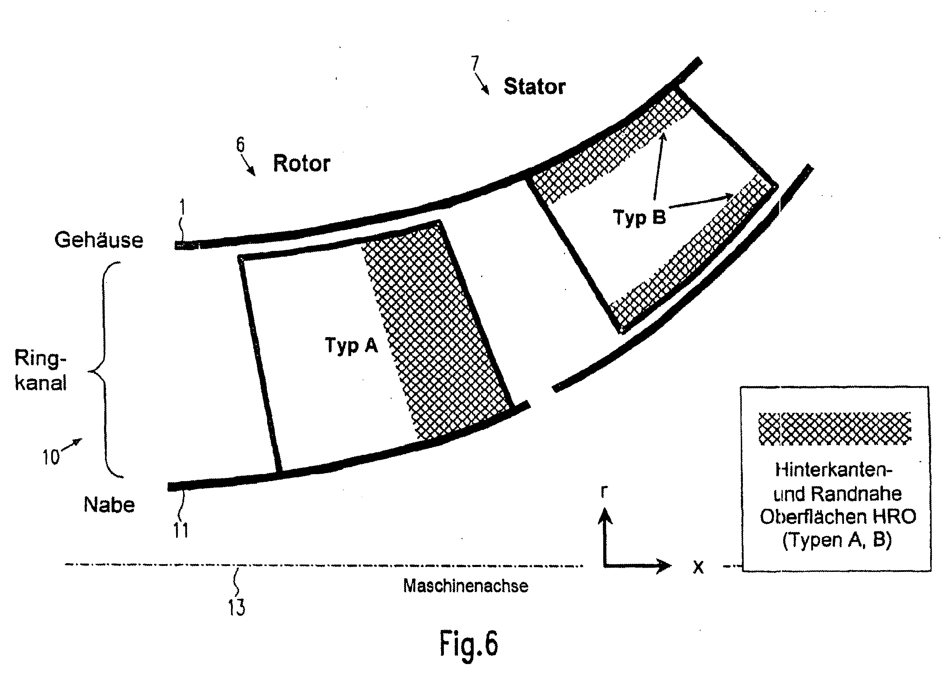

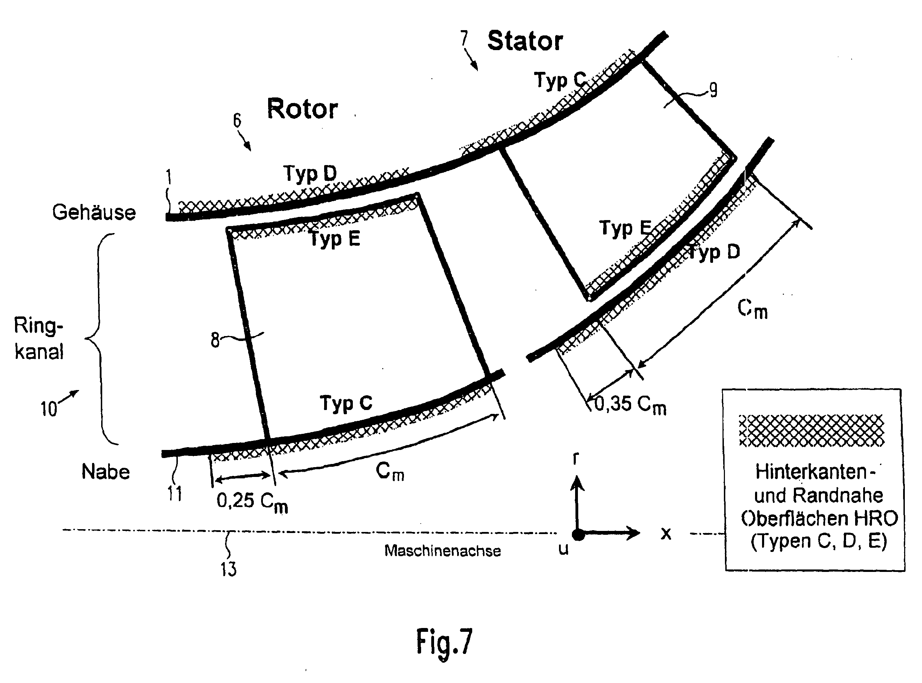

Wie die Darstellungen in Fig. 6 und 7 zeigen, ergeben sich fünf HRO-Typen:

HRO, Typ A: Die Oberflächen sind an der Schaufelsaug- oder Druckseite eines Rotors oder Stators ausgebildet, und zwar zwischen 70% und 100% der meridionalen Schaufelsehnenlänge Cm. Oberflächenabschnitte im zentralen Bereich der Hinterkante, deren Oberflächennormale einen Winkel von weniger als 60 Grad mit der mittleren Abströmrichtung bildet, sind dabei ausgeschlossen.

HRO, Typ B: Die Oberflächen sind an der Schaufelsaugseite, der Schaufeldruckseite, der Vorderkante oder der Hinterkante eines Rotors oder Stators ausgebildet, und zwar an der Nabe zwischen 0% und 25% der lokalen Ringkanalweite W und am Gehäuse zwischen 75% und 100% der lokalen Ringkanalweite W.

HRO, Typ C: Die Oberflächen sind an der Naben- oder Gehäusekontur des Ringkanals mit fester Verbindung zur Schaufel ausgebildet, wie sie im Fall von Plattformen, Deckbändern, Blisk- und Blingkonfigurationen auftreten, und zwar zwischen der Hinterkantenebene HK und einer Ebene, die sich 25% der meridionalen Schaufelsehnenlänge Cm vor der Vorderkante VK befindet.

HRO, Typ D: Die Oberflächen sind an Naben- und Gehäusekontur des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 35% der meridionalen Schaufelsehnenlänge Cm vor der Vorderkante VK befindet, ausgebildet.

HRO, Typ E: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

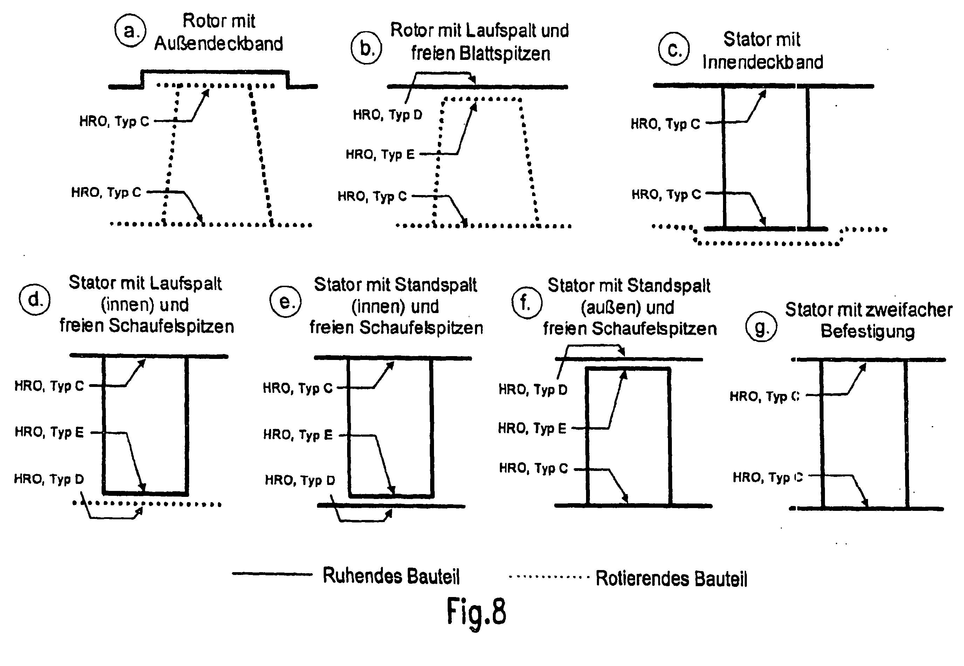

Die Fig. 8 zeigt unterschiedliche Ausführungen von Schaufelreihen der Strömungsarbeitsmaschine mit einer Kennzeichnung der wiederkehrenden Elemente HRO, Typ C, Typ D, Typ E. Im Einzelnen zeigen dabei die Ausführungsbeispiele Folgendes:

Die Fig. 8a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 8b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 8c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenes Deckband und einer innerhalb der ruhenden Bauteile rotierenden Rotortrommel.

Die Fig. 8d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 8e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 8f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 8g verdeutlicht eine Baugruppe, welche aus einem ruhenden Innen- und Außengehäuse besteht, sowie mehreren mit dem Innen- und Außengehäuse verbundenen Statorschaufeln.

Die Führung des zuzuführenden Fluids erfolgt über Strömungswege an der Peripherie des Ringkanals 10 oder innerhalb von Schaufeln 8, 9 und ihrer umgebenden Bauteile. Das Fluid wird dabei entweder bei freier Strömung oder aber mit Hilfe mindestens eines im Strömungsweg befindlichen Drosselorgans 12, das unverstellbar oder auch regelbar sein kann, in den Ringkanal im Bereich der betreffenden Schaufelreihe zugeführt. Die Zuführung des Fluids erfolgt entweder von einer Fremdquelle aus oder wird von Orten der Strömungsarbeitsmaschine oder der die Strömungsarbeitsmaschine einschließenden Gesamtanlage zurückgeführt.

Die notwendigen Elemente des Strömungsweges können als einfacher Hohlraum, als Ringraum, als Rohrleitung, als Kanal, als Düse oder als Diffusor beliebiger Querschnittsform ausgestaltet sein und werden erfindungsgemäß im Folgenden unter dem Begriff "Kammer" zusammengefasst.

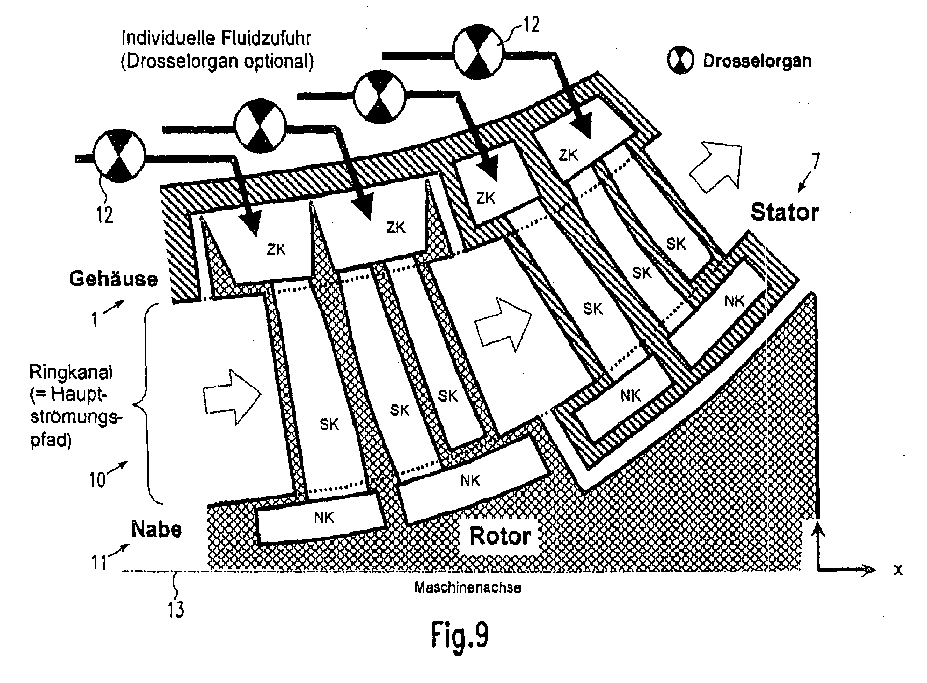

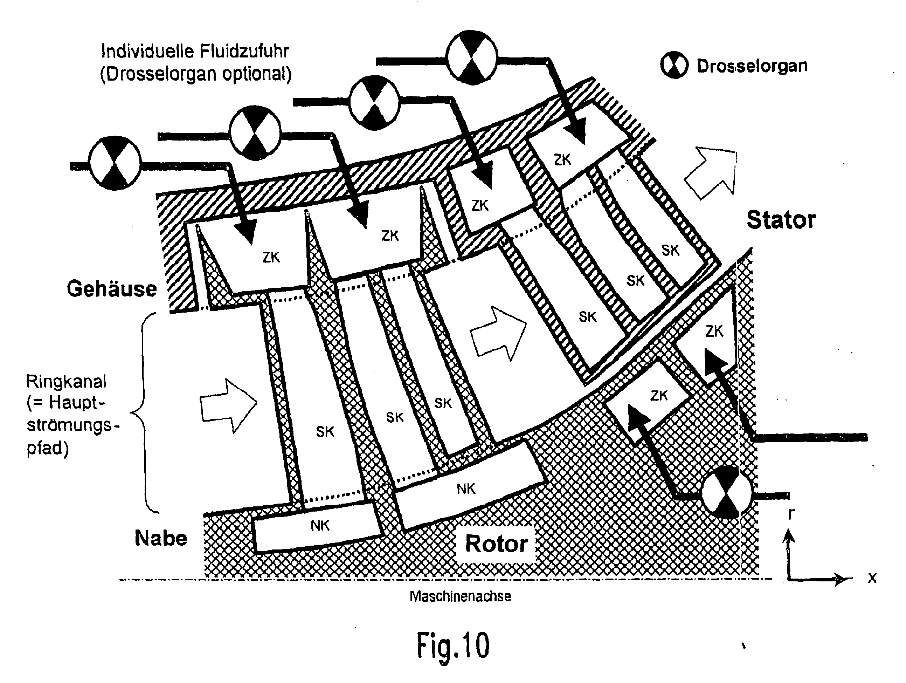

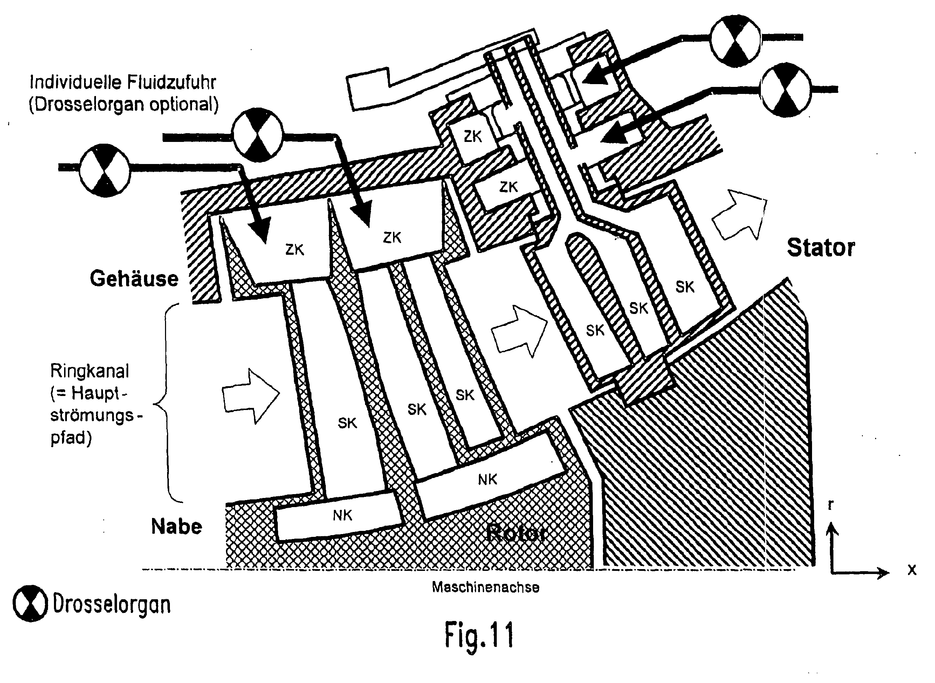

Die Fig. 9 bis 11 zeigen unterschiedliche Ausgestaltungsvarianten mit Konfigurationen, bei welchen Zufuhrkammern (ZK), Schaufelinnenkammern (SK) und Nabenkammern (NK) vorgesehen sind.

Im Einzelnen zeigen die Fig. 9 bis 11 Ausgestaltungsvarianten, bei welchen den einzelnen Schaufelreihen jeweils mindestens eine Kammer am oder im Gehäuse zugeordnet ist, durch die Fluid der Schaufelreihe zugeführt wird (Zufuhrkammer ZK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur inneren Ringkanalkontur, so kann als letztes Kammerglied des zur Fluidzufuhr konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und von dieser Fluid entgegen nimmt.

Besitzt die Schaufel ein freies Ende mit Radialspalt an der Nabe, oder weist die Schaufel keine über die gesamte Schaufelhöhe reichende Schaufelinnenkammer auf, kann zur Fluidzufuhr an der Nabe ebenfalls mindestens eine Zufuhrkammer ZK an oder in der Nabe außerhalb des Ringkanals existieren.

Zufuhrkammern und Nabenkammern erstrecken sich über die Gesamtheit oder Teile des Maschinenumfangs. Die Zufuhrkammern ZK dienen der Zuleitung des Fluids zur betreffenden Schaufelreihe, wobei die Schaufelinnenkammern SK und Nabenkammern Hilfsmittel sind, um den Zugang zu den relevanten Hinterkanten- und Randnahen Oberflächen (HRO) der betreffenden Schaufelreihe herzustellen.

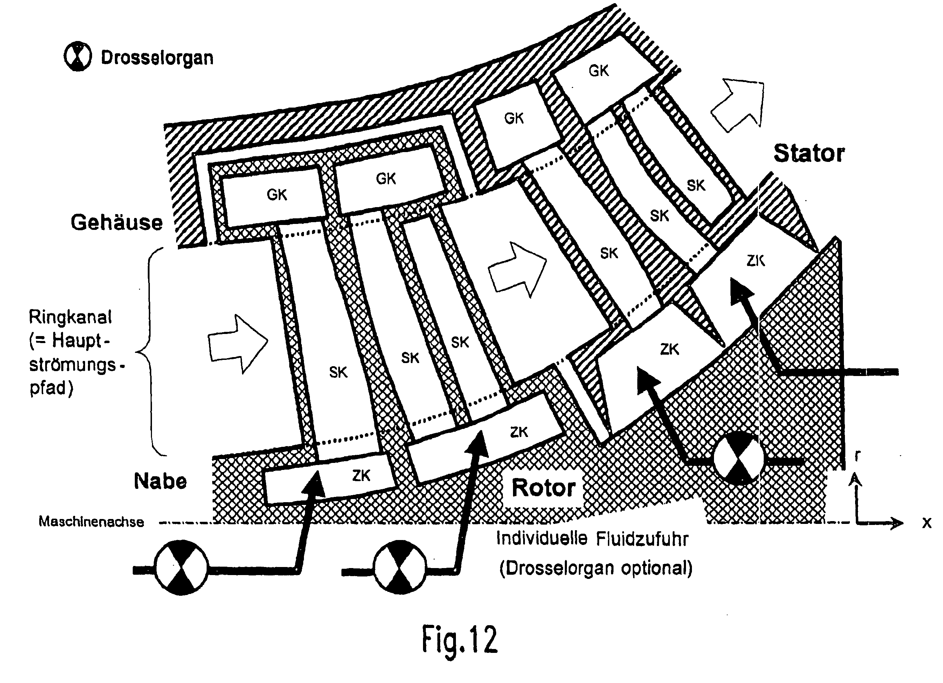

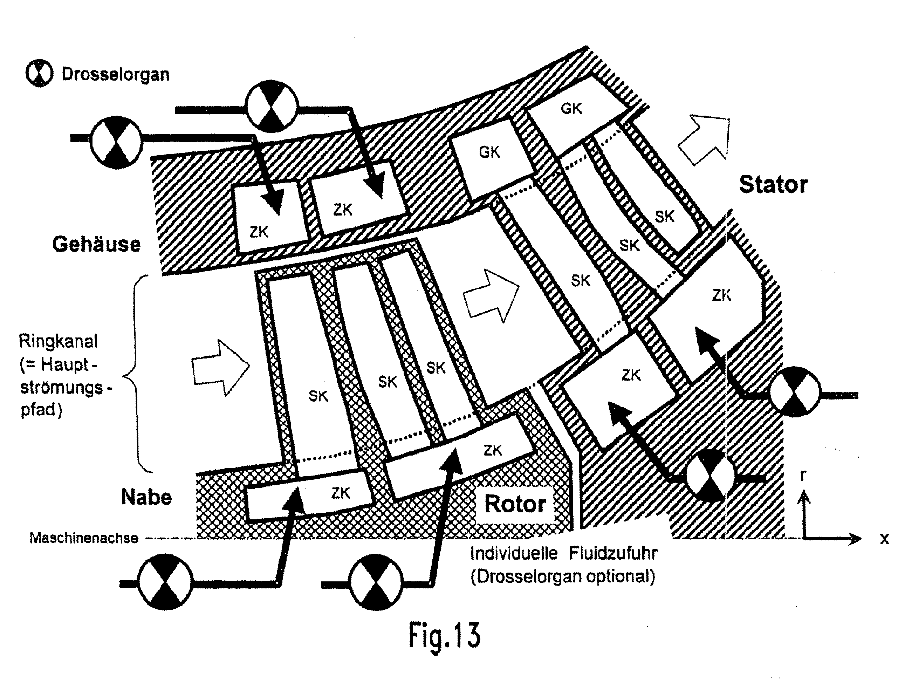

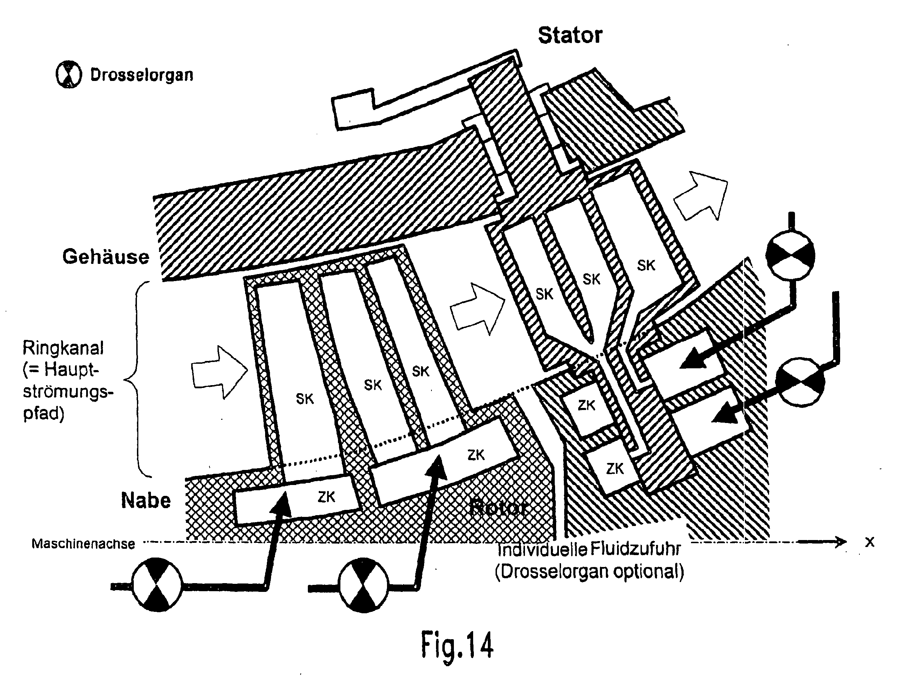

Während in den Fig. 9 bis 11 Ausgestaltungsformen gezeigt wurden, bei welchen mindestens eine Zufuhrkammer ZK am oder im Gehäuse angeordnet ist, zeigen die Fig. 12 bis 14 Ausgestaltungsformen, bei welchen mindestens eine Kammer an oder in der Nabe angeordnet ist, durch die Fluid der Schaufelreihe zugeführt wird (Zufuhrkammer ZK). Für den Fall, dass mindestens eine weitere Kammer im Innern mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur äußeren Ringkanalkontur, so kann als letztes Kammerglied des zur Fluidzufuhr konzipierten Gesamtströmungsweges mindestens eine Kammer am oder im Gehäuse existieren (Gehäusekammer GK), die mit mindestens einer Schaufelinnenkammer SK in Verbindung steht und von dort Fluid entgegen nimmt.

Besitzt die Schaufel ein freies Ende mit Radialspalt am Gehäuse oder weist die Schaufel keine über die gesamte Schaufelhöhe reichende Schaufelinnenkammer auf, kann zur Fluidzufuhr am Gehäuse ebenfalls mindestens eine Zufuhrkammer am oder im Gehäuse außerhalb des Ringkanals existieren.

Die Zufuhrkammern und Gehäusekammern erstrecken sich über die Gesamtheit oder nur Teile des Umfangs der Strömungsarbeitsmaschine. Die Zufuhrkammern dienen der Zuleitung des Fluids zu der betreffenden Schaufelreihe. Die Schaufelinnenkammern und die Gehäusekammern sind Hilfsmittel, um den Zugang zu relevanten Hinterkanten- und Randnahen Oberflächen (HRO) im Bereich der betreffenden Schaufelreihe herzustellen.

Es ist vorgesehen, dass bei einer Schaufelreihe der im Zusammenhang mit den Fig. 9 bis 11 bzw. 12 bis 14 beschriebenen Ausgestaltungsformen an mindestens einer Hinterkanten- und Randnahen Oberfläche (HRO) an mindestens einer ihrer Schaufeln und/oder mindestens einem ihrer den Ringkanal begrenzenden Bauteile mindestens eine Fluidzufuhrvorrichtung angeordnet ist, die eine Verbindung zwischen der Hinterkanten- und Randnahen Oberflächen (HRO) und einer Zufuhrkammer ZK, einer Schaufelinnenkammer SK, einer Nabenkammer NK oder einer Gehäusekammer GK herstellt. Die konstruktive Ausführung der Fluidzufuhrvorrichtung erfolgt durch mechanische, chemische oder thermische Materialabtragsverfahren an dem die Hinterkanten- und Randnahen Oberfläche (HRO) bildenden Bauteil.

In einer alternativen Ausgestaltung erhält die Fluidzufuhrvorrichtung ihre Begrenzungen durch Kombination mindestens zweier vorbereiteter Einzelbauteile, die lose oder fest zusammengefügt werden.

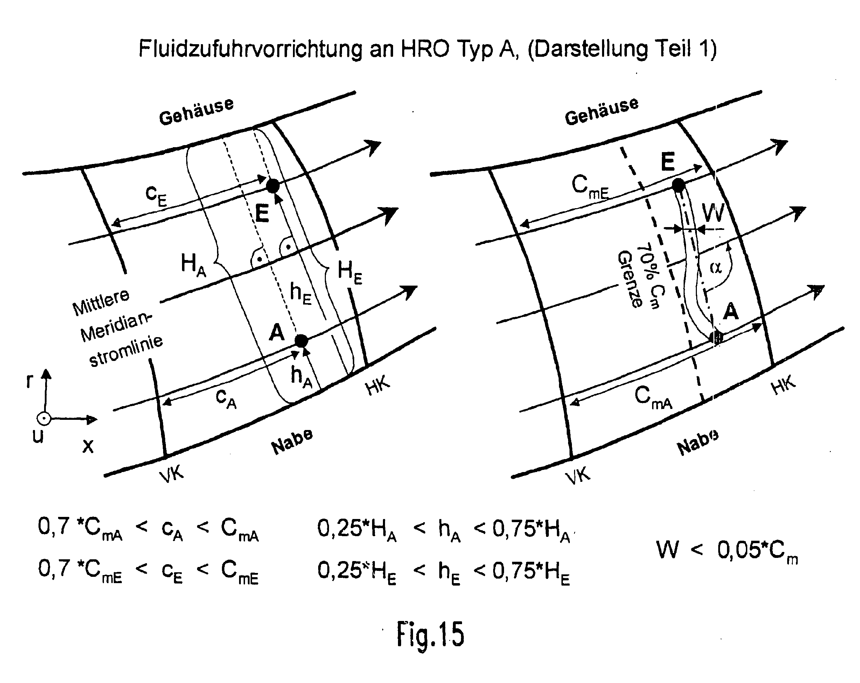

Die Fig. 15 bis 19 zeigen erfindungsgemäße Ausführungsbeispiele für die Fluidzufuhrvorrichtung an Hinterkanten- und Randnahen Oberflächen (HRO) des Typs A. Dargestellt sind Konfigurationen von Schlitzen bzw. funktional ähnlichen Ersatzelementen auf einem eng begrenzten hinterkantennahen Abschnitt der Schaufeloberfläche, sowohl gültig für die Saugseite als auch die Druckseite der Schaufel. Einzelne Schlitze bzw. Ersatzelemente können unterschiedlichen Schaufelinnenkammern zugeordnet sein.

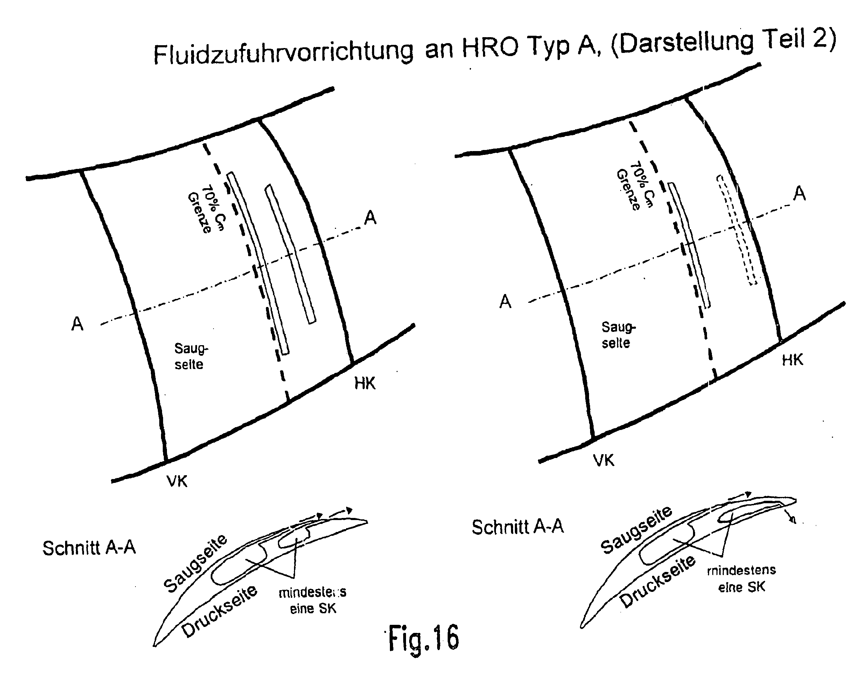

Betrachtet man die Schaufeloberfläche in dem aus Axialrichtung und Radialrichtung gebildeten Koordinatensystem (x, r), siehe Fig. 15, so ergibt sich durch eine äquidistante Teilung der auf der mittleren Meridianstromlinie basierten Othogonalen eine Schar von Meridianstromlinien. Entlang der Meridianstromlinien durch den Anfangspunkt A und den Endpunkt E sind die meridionalen Lauflängen cA und cE zur Vorderkante (VK) sowie die meridionalen Sehnenlängen CmA und CmE zwischen Vorder- und Hinterkante (HK) festgelegt. Innerhalb des besonders relevanten, engen Bereiches zwischen der bei 70% der meridionalen Sehnenlänge gelegenen Grenzlinie und der Hinterkantenlinie befindet sich eine Konfiguration aus einem oder auch mehreren Schlitzen, die orthogonal zur Meridianrichtung unterschiedliche Erstreckung besitzen dürfen. Dies ist in Fig. 15 für den Fall eines einzelnen Schlitzes und in Fig. 16 für den Fall zweier Schlitze beispielhaft dargestellt. Jeder Schlitz ist definiert durch einen Anfangs- und Endpunkt, deren Lage wie folgt festgelegt ist:

$$0,7*CmA < cA < CmA$$

$$0,7*CmE < cE < CmE$$

$$0,25*HA < hA < 0,75\%HA$$

$$0,25*HE < hE < 0,75\%HE$$

Die Ringkanalhöhen HA und HE, und ebenso die Nabenabstände hA und hE werden in einer Richtung senkrecht zur mittleren Meridianstomlinie gemessen.

Der Verlauf eines jeden Schlitzes zwischen Anfangs- und Endpunkt kann gerade oder auch gekrümmt beschaffen sein. Die Schlitze besitzen eine konstante oder eine in ihrer Längsrichtung veränderliche Weite W, die aber stets kleiner als 5% der meridionalen Sehnenlänge Cm bleibt (W < 0,05*Cm). Sie weisen eckige, angefaste oder gerundete Oberflächenkanten auf. Sie besitzen an Anfangs- und Endpunkt eine eckige Form oder einen runden (langlochähnlichen) Abschluss. Die Schlitze führen senkrecht oder schräg zur Schaufeloberfläche durch das Wandmaterial in dieselbe Schaufelinnenkammer oder auch unterschiedliche Schaufelinnenkammern.

Erfindungsgemäß ergibt sich eine strömungstechnisch besonders günstige Lösung, wenn Schlitze auf der Schaufelsaugseite innerhalb eines engen, wie folgt begrenzten Korridors angeordnet werden:

$$0,7*CmA < cA < 0,85*CmA$$

$$0,7*CmE < cE < 0,85*CmE$$

und dabei die Verbindungslinie zwischen Anfangspunkt A und Endpunkt E eines jeden Schlitzes mit der Meridianströmungsrichtung einen Winkel von 80° bis 110° einschließt (80 <= alpha <= 110). Erfindungsgemäß ist es ebenso besonders günstig, Schlitze auf der Schaufeldruckseite innerhalb eines engen, wie folgt begrenzten Korridors anzuordnen:

$$0,9*CmA < cA < CmA$$

$$0,9*CmE < cE < CmE.$$

und dabei die Verbindungslinie zwischen Anfangspunkt A und Endpunkt E eines jeden Schlitzes mit der Meridianströmungsrichtung einen Winkel von 80° bis 110° einschließt (80 <= alpha <= 110).

Erfindungsgemäß ergibt sich schließlich eine besonders günstige Beeinflussung der Schaufelumströmung, wenn Schlitze sowohl auf der Schaufelsaugseite als auch auf der Schaufeldruckseite angeordnet werden. Eine beispielhafte Darstellung für eine Konfiguration zweier Schlitze zeigt die Fig. 16, rechts.

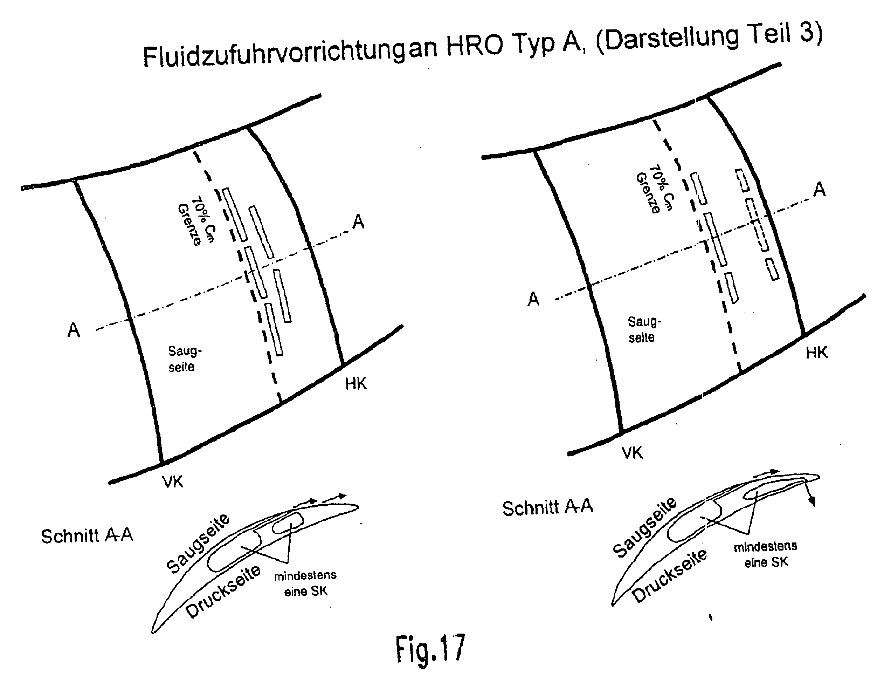

In einer abgewandelten Form tritt -bei gleichen Regeln hinsichtlich der Positionierung und des Verlaufes an der Schaufeloberfläche sowie der Beschaffenheit der Oberflächenkanten und Orientierung in der Schaufel- an die Stelle mindestens eines zwischen den Punkten A und E durchgängigen Schlitzes eine Reihe aus mehreren kurzen Schlitzen mit dazwischen befindlichen Lücken beziehungsweise Stegen. Dabei ist es insbesondere günstig, wenn im Falle der Verwendung von mehr als einer Reihe auf derselben Schaufelseite (Druck- oder Saugseite) Kurzschlitze und Stege bei Betrachtung entlang einer Meridianstromlinie abwechselnd auftreten, siehe Darstellungen in Fig. 17.

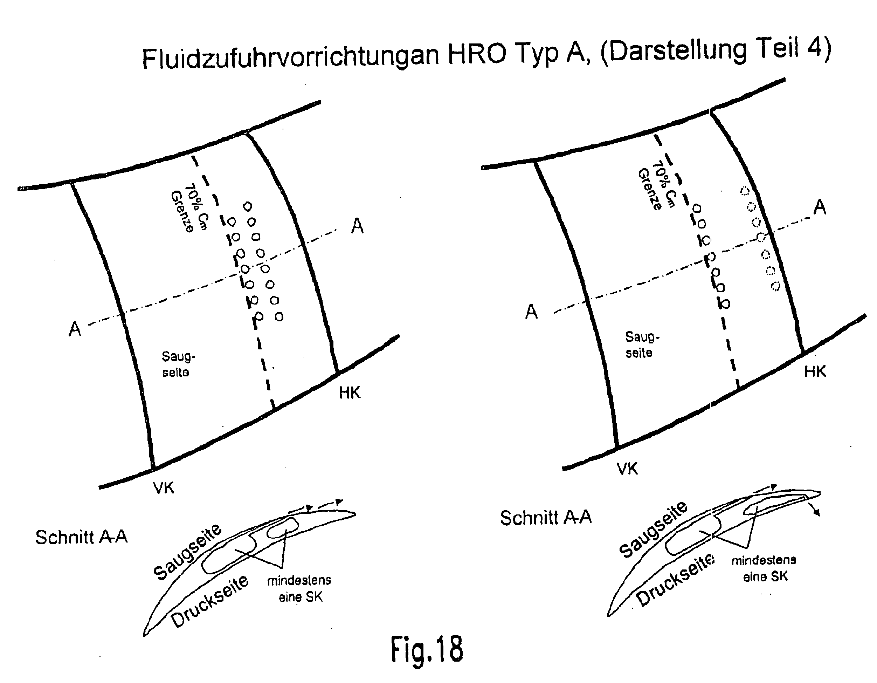

In einer anderen abgewandelten Form tritt -bei gleichen Regeln hinsichtlich der Positionierung und des Verlaufes an der Schaufeloberfläche sowie der Beschaffenheit der Oberflächenkanten und Orientierung in der Schaufel- an die Stelle mindestens eines zwischen den Punkten A und E durchgängigen Schlitzes eine Reihe aus mehreren Löchern. Dabei ist es insbesondere günstig, wenn im Falle der Verwendung von mehr als einer Reihe auf derselben Schaufelseite (Druck- oder Saugseite) Löcher und Lochzwischenräume bei Betrachtung entlang einer Meridianstromlinie abwechselnd auftreten, siehe Darstellungen in Fig. 18.

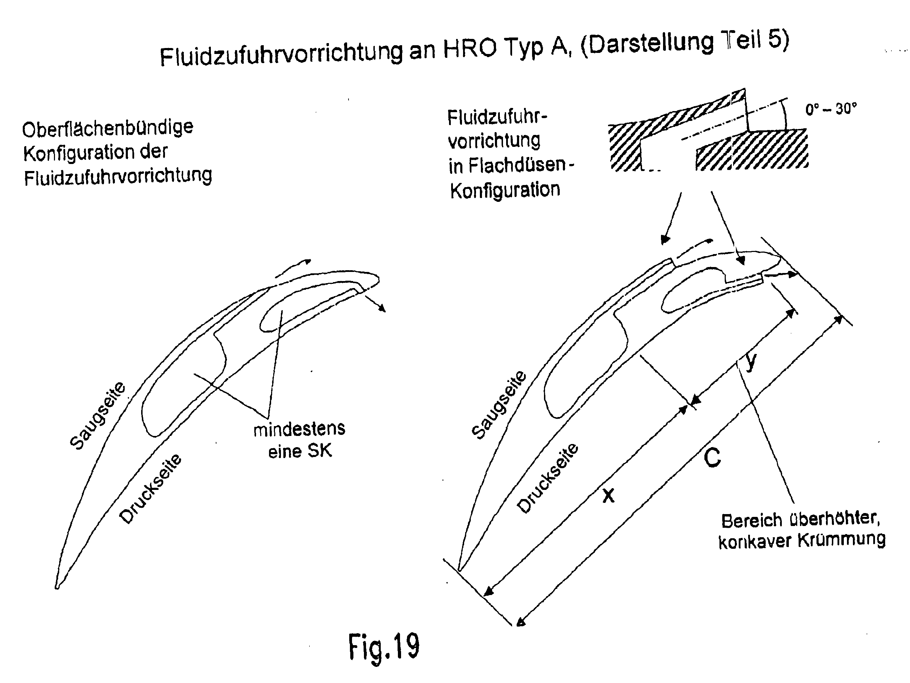

In einer anderen abgewandelten Form wird -bei gleichen Regeln hinsichtlich der Positionierung und des Verlaufes an der Schaufeloberfläche sowie der Beschaffenheit der Oberflächenkanten - mindestens eine Fluidzufuhrvorrichtung (Schlitz, Kurzschlitzreihe oder Lochreihe) als Flachdüse ausgeformt, dadurch gekennzeichnet, dass Fluid unter höchstens 30° zur Schaufeloberfläche zugeführt wird und die Schaufeloberfläche wie in Fig. 19 gezeigt, einen entsprechenden Absatz aufweist.

Eine besonders günstige Ausgestaltung gemäß der vorliegenden Erfindung ist durch das gemeinsame Auftreten der folgenden, ebenfalls in Fig. 19 dargestellten Ausgestaltungsmerkmale gegeben:

1.) eine Flachdüse zur Fluidzufuhr an einer Stelle der Schaufeldruckseite zwischen 85% der Profilsehnenlänge C und der Hinterkante 0,85 < (x+y)/C < 1.

2.) die Portionen x und y der Sehnenlänge stehen in einem Verhältnis von mindestens x/y = 1,5.

3.) die über die Strecke x erreichte Richtungswinkeländerung der Tangente an die Druckseitenoberfäche ist kleiner als die über die Strecke y erreichte Richtungswinkeländerung der Tangente an die Druckseitenoberfäche.

Bei der erfindungsgemäßen Strömungsarbeitsmaschine wird somit ein bislang unerreichtes Maß an Grenzschichtbeeinflussung erzielt. Dies ist bei unterschiedlichen Arten von Strömungsarbeitsmaschinen wie Bläsern, Verdichtern, Pumpen und Ventilatoren möglich. Je nach Ausführungsvariante sind eine aerodynamische Belastung und eine Strömungsumlenkung möglich, die bis zu 50% über den nach heutigem Stand der Technik erreichten Werten liegen. Für festgeschriebene Leistungswerte einer Strömungsarbeitsmaschine lässt sich unter Beibehaltung oder einer Verbesserung des Wirkungsgrades von bis zu 1% die Anzahl der verbauten Teile um etwa 30% gegenüber einer konventionellen Bauweise senken. Die Kosten sinken um 10% bis 15%. Bei Einsatz des neuen Schaufelkonzeptes im Verdichter eines Flugtriebwerkes mit rund 25000 Pfund Schub ergibt eine Reduzierung des spezifischen Kraftstoffverbrauches von bis zu 0,5% und eine Gewichtsersparnis von rund 5%.

**Bezugszeichenliste**

1    Gehäuse
2    Schaufel
3    Schlitz
4    Schlitz
5    Stator

6       Rotor
7       Stator
8       Rotorschaufel
9       Statorschaufel
10     Ringkanal
11     Rotortrommel (Nabe)
12     Drosselorgan
13     Maschinenachse

**Patentansprüche**

1. Strömungsarbeitsmaschine mit zumindest einem Rotor (6), der mehrere an einer rotierenden Welle befestigte Rotorschaufeln (8) umfasst, sowie mit einem einen Ringkanal bildenden Gehäuse (1), welches unter Durchströmung des Rotors (6) und/oder eines Stators (9) von einem Fluid durchströmt wird, wobei Mittel in Form eines Schlitzes, einer Kurzschlitzreihe, einer Lochreihe oder einer Flachdüse zur Zufuhr von Fluid an mindestens einer Schaufel (8) einer Schaufelreihe des Rotors (6) und/oder des Stators (9) an aerodynamisch kritischen Orten auf hinterkanten- und randnahen Oberflächen (HRO) vorgesehen sind,
wobei zur gezielten Beeinflussung der dreidimensionalen Strömung die Mittel zur Fluidzufuhr an hinterkanten- und randnahen Oberflächen (HRO) in Form von Oberflächen an der Schaufelsaugseite oder Schaufeldruckseite eines Rotors (6) oder Stators (7) in einem engen Bereich zwischen einer bei 70% der meridionalen Profilsehnenlänge gelegenen Grenzlinie und der Hinterkantenlinie vorgesehen sind, wobei Oberflächenabschnitte im Bereich der Hinterkante, deren Oberflächennormale einen Winkel von weniger als 60° mit der Abströmrichtung bildet, ausgeschlossen sind,
**dadurch gekennzeichnet,**
**dass** die Mittel zur Fluidzufuhr durch mehrere unterschiedliche Schaufelinnenkammern versorgt werden,
**dass** einzelne Mittel zur Fluidzufuhr auf der Schaufelsaugseite entlang einer Linie zwischen einem Anfangspunkt A und einem Endpunkt E und innerhalb eines begrenzten Bereiches zwischen 70% und 85% der meridionalen Profilsehnenlänge angeordnet sind, wobei die Linie zwischen Anfangspunkt A und Endpunkt E mit der Meridianströmungsrichtung einen Winkel von 80° bis 110° ($80 \leq \alpha \leq 110$) einschließt, gemäß:

$$0{,}7 \cdot CmA < cA < 0{,}85 \cdot CmA \text{ für den Anfangspunkt A und}$$
$$0{,}7 \cdot CmE < cE < 0{,}85 \cdot CmE \text{ für den Endpunkt E,}$$

**dass** einzelne Mittel zur Fluidzufuhr auf der Schaufeldruckseite entlang einer Linie zwischen einem Anfangspunkt A und einem Endpunkt E und innerhalb eines begrenzten Bereiches zwischen 90% und 100% der meridionalen Profilsehnenlänge angeordnet sind, wobei die Linie zwischen Anfangspunkt A und Endpunkt E mit der Meridianströmungsrichtung einen Winkel von 80° bis 110° ($80 \leq \alpha \leq 110$) einschließt, gemäß:

$$0{,}9 \cdot CmA < cA < CmA \text{ für den Anfangspunkt A und}$$
$$0{,}9 \cdot CmE < cE < CmE \text{ für den Endpunkt E,}$$

**dass** sowohl auf der Schaufelsaugseite als auch auf der Schaufeldruckseite Mittel zur Fluidzufuhr vorgesehen sind, und
**dass** mindestens ein Mittel zur Fluidzufuhr die Form einer Flachdüse aufweist, wobei die Flachdüse so beschaffen ist, dass das Fluid unter höchstens 30° zur Schaufeloberfläche zugeführt wird und die Oberfläche einen entsprechenden Absatz aufweist.

2. Strömungsarbeitsmaschine nach Anspruch 1, **dadurch gekennzeichnet, dass**
das zugeführte Fluid durch mindestens zwei Austrittsöffnungen in den Hauptströmungspfad gelangt, wobei die mindestens zwei Austrittsöffnungen in Form von
zumindest einem Schlitz,
zumindest einer Flachdüse,
einer Formation aus geraden oder gekrümmten Schlitzen, oder einer Formation aus mehreren Löchern, ausgebildet sind.

3. Strömungsarbeitsmaschine nach Anspruch 1 oder 2, **dadurch gekennzeichnet,**
**dass** die Flachdüse an einer Stelle auf der Druckseite zwischen 85% der Profilsehnenlänge (C) und der Hinterkante angeordnet ist und die Profilsehne zwei Portionen X und Y aufweist, welche die Position der Flachdüse definieren, wobei X und Y mindestens in einem Verhältnis von 1,5 stehen ($X/Y = 1{,}5$) und die über die Strecke X erreichte Richtungswinkeländerung der Tangente an die Druckseitenoberfläche kleiner ist als die über die Strecke Y erreichte Richtungswinkeländerung der Tangente an die Druckseitenoberfläche ist.

**Claims**

1. Fluid-flow machine with at least one rotor (6), which includes several rotor blades (8) attached to a rotating shaft and with a casing (1) which forms an annulus and is passed by a fluid flowing through the rotor (6) and/or a stator (9),
with means in the form of a slot, a short-slot row, a hole row or a flat nozzle for the supply of fluid to at least one blade (8) of a blade row of the rotor (6) and/or the stator (9) being provided on aerodynamically critical points on trailing edge and rim-near surfaces (HRO),

with the means for fluid supply on trailing edge and rim-near surfaces (HRO) - for specifically influencing the three-dimensional flow - being provided in the form of surfaces on the blade suction side or the blade pressure side of a rotor (6) or a stator (7) in a narrow zone between a border line located at 70% of the meridional profile chord length and the trailing edge line, with surface sections in the area of the trailing edge, whose surface normal forms an angle of less than 60 degrees to the outlet flow direction being excluded,

**characterized in**

**that** the means for fluid supply are fed by several different blade inner chambers,

**that** individual means for fluid supply on the blade suction side are arranged along a line extending between a starting point A and an end point E and within a limited zone between 70% and 85% of the meridional profile chord length,

with the line between the starting point A and the end point E including an angle of 80 degrees to 110 degrees ($80 \leq \alpha \leq 110$) with the meridional flow direction, as per:

0.7*CmA < cA < 0.85*CmA for the starting point A, and
0.7*CmE < cE < 0.85*CmE for the end point E,

**that** individual means for fluid supply on the blade pressure side are arranged along a line extending between a starting point A and an end point E and within a limited zone between 90% and 100% of the meridional profile chord length,

with the line between the starting point A and the end point E including an angle of 80 degrees to 110 degrees ($80 \leq \alpha \leq 110$) with the meridional flow direction, as per:

0.9*CmA < cA < CmA for the starting point A, and
0.9*CmE < cE < CmE for the end point E,

**that** means for fluid supply are provided on both the blade suction side and the blade pressure side, and that at least one means for fluid supply has the shape of a flat nozzle,

with the flat nozzle being designed such that the fluid is supplied at a maximum angle of 30 degrees to the blade surface and that the surface is provided with an appropriate step.

2. Fluid-flow machine in accordance with Claim 1, **characterized in that** the fluid supplied reaches the main flow path via at least two outlet openings, with the at least two outlet openings being provided in the form of at least one slot,

at least one flat nozzle,

a formation of rectilinear or curvilinear slots, or
a formation of several holes.

3. Fluid-flow machine in accordance with Claim 1 or 2, **characterized in that** the flat nozzle is arranged at a point on the pressure side between 85 percent of the profile chord length (C) and the trailing edge and that the profile chord includes two portions X and Y, which define the position of the flat nozzle, with Y and Y having a ratio of at least 1.5 (X/Y = 1.5) and the directional angle change of the tangent to the pressure side surface obtained over the distance X is smaller than the directional angle change of the tangent to the pressure side surface obtained over the distance Y.

**Revendications**

1. Turbomachine avec au moins un rotor (6) comprenant plusieurs aubes de rotor (8) fixées sur un arbre rotatif, ainsi qu'un carter (1) formant un canal annulaire qui est traversé par un fluide lors de l'écoulement dans le rotor (6) et/ou dans un stator (9),

sachant que des moyens sous forme d'une fente, d'une rangée de fentes courtes, d'une rangée d'orifices ou d'une buse plate et destinés à amener du fluide à au moins une aube (8) d'une rangée d'aubes du rotor (6) et/ou du stator (9) sont prévus à des points aérodynamiquement critiques sur des surfaces du bord de fuite et à proximité des bords (HRO),

sachant que pour influencer de manière ciblée le flux tridimensionnel, les moyens destinés à amener du fluide sur des surfaces du bord de fuite et à proximité des bords (HRO) sont prévus sous forme de surfaces sur le côté aspiration ou le côté refoulement des aubes d'un rotor (6) ou d'un stator (7) dans une zone étroite entre une ligne limite située à 70 % de la longueur de corde méridienne du profil et la ligne du bord de fuite,

sachant que des sections de surface dans la zone du bord de fuite, dont la normale de surface forme un angle inférieur à 60° avec la direction d'évacuation, sont exclues, **caractérisée en ce**

**que** les moyens destinés à amener du fluide sont alimentés par plusieurs chambres internes d'aube différentes,

**que** des moyens individuels destinés à amener du fluide sont disposés du côté aspiration des aubes le long d'une ligne entre un point initial A et un point final E et à l'intérieur d'une zone délimitée entre 70 % et 85 % de la longueur de corde méridienne du profil,

sachant que la ligne entre le point initial A et le point final E inscrit avec la direction d'écoulement méridienne un angle de 80° à 110° ($80 \leq \alpha \leq 110$), conformément à :

0,7*CmA < cA < 0,85*CmA pour le point initial A et
0,7*CmE < cE < 0,85*CmE pour le point final E,

**que** des moyens individuels destinés à amener du fluide sont disposés du côté refoulement des aubes le long d'une ligne entre un point initial A et un point final E et à l'intérieur d'une zone délimitée entre 90 % et 100 % de la longueur de corde méridienne du profil,
sachant que la ligne entre le point initial A et le point final E inscrit avec la direction d'écoulement méridienne un angle de 80° à 110° $(80 \leq \alpha \leq 110)$, conformément à :

0,9*CmA < cA < CmA pour le point initial A et
0,9*CmE < cE < CmE pour le point final E,

**que** des moyens destinés à amener du fluide sont prévus tant du côté aspiration que du côté refoulement des aubes, et qu'au moins un moyen destiné à amener du fluide présente la forme d'une buse plate,
sachant que la buse plate est conçue de manière telle que le fluide est amené sous un angle de 30° au maximum par rapport à la surface de l'aube et que la surface présente un gradin approprié.

2. Turbomachine selon la revendication n° 1, **caractérisée en ce que** le fluide amené parvient dans la voie d'écoulement principale par au moins deux orifices de sortie, sachant que les au moins deux orifices de sortie sont conçus sous forme
d'au moins une fente,
d'au moins une buse plate,
d'une formation de fentes rectilignes ou curvilignes, ou
d'une formation de plusieurs orifices.

3. Turbomachine selon la revendication n° 1 ou n° 2, **caractérisée en ce que** la buse plate est disposée du côté refoulement à un point entre 85 % de la longueur de corde du profil (C) et le bord de fuite, et que la corde du profil présente deux segments X et Y qui définissent la position de la buse plate, sachant que le rapport entre X et Y est au moins égal à 1,5 (X/Y = 1,5) et que la modification de l'angle de direction de la tangente à la surface du côté refoulement atteinte sur le segment X est inférieure à la modification de l'angle de direction de la tangente à la surface du côté refoulement atteinte sur le segment Y.

**Rotor:**
Einzeldüsen
am Gehäuse
(punktuell)

Saugseite (SS)

**Rotor und Stator:**
Schlitz (an Vorderkante oder
auf SS bei bis zu 60% Profiltiefe)

**Rotor:**
Schlitz an Nabe oder Gehäuse,
weit vor der Hinterkante

Fig.1

EP 2 228 542 B1

Fig.3

Fig.4A

Fig.4B

Gehäuse

Ringkanal

10

Rotortrommel
(Nabe)

Rotor
(n)

Stator
(n)
aussen

Gehäuse

Stator
(n)
innen

Rotor
(n+1)

Stator
(n+1)

r

x

13

Maschinenachse

**Fig.4C**

Gehäuse

Ringkanal

10

Rotor-
Trommel 1
(Nabe)

Rotor
(n)

Rotor
(n+1)

Stator
(n+1)

Rotor-
Trommel 2
(Nabe)

S
(n)

R
(n+1)

S
(n+1)

Gehäuse

r

x

13

Maschinenachse

**Fig.4D**

Fig.5

Fig.6

EP 2 228 542 B1

Fig.7

**a.** Rotor mit Außendeckband

**b.** Rotor mit Laufspalt und freien Blattspitzen

**c.** Stator mit Innendeckband

**d.** Stator mit Laufspalt (innen) und freien Schaufelspitzen

**e.** Stator mit Standspalt (innen) und freien Schaufelspitzen

**f.** Stator mit Standspalt (außen) und freien Schaufelspitzen

**g.** Stator mit zweifacher Befestigung

——— Ruhendes Bauteil          ············· Rotierendes Bauteil

## Fig.8

EP 2 228 542 B1

Individuelle Fluidzufuhr
(Drosselorgan optional)

⊗ Drosselorgan

12

ZK

ZK

ZK

ZK

Stator

7

Gehäuse

1

Ringkanal
(= Hauptströmungspfad)

10

SK

SK

SK

SK

SK

SK

SK

SK

NK

NK

NK

NK

Nabe

Rotor

11

x

Maschinenachse

13

Fig.9

EP 2 228 542 B1

**Fig.10**

Individuelle Fluidzufuhr
(Drosselorgan optional)

⊗ Drosselorgan

Stator

ZK

Gehäuse

ZK

ZK

ZK

SK

SK

SK

Ringkanal
(= Hauptströmungspfad)

SK

SK

SK

ZK

ZK

Nabe

NK

NK

Rotor

r

x

Maschinenachse

EP 2 228 542 B1

Fig.11

Fig.12

EP 2 228 542 B1

Fig.13

Fig.14

Fluidzufuhrvorrichtung an HRO Typ A, (Darstellung Teil 1)

$$0,7 * C_{mA} < c_A < C_{mA} \qquad 0,25 * H_A < h_A < 0,75 * H_A$$

$$0,7 * C_{mE} < c_E < C_{mE} \qquad 0,25 * H_E < h_E < 0,75 * H_E$$

$$W < 0,05 * C_m$$

Fig.15

EP 2 228 542 B1

# Fluidzufuhrvorrichtung an HRO Typ A, (Darstellung Teil 2)

70% Cm
Grenze

Saugseite

A

HK

VK

70% Cm
Grenze

Saugseite

A

HK

VK

Schnitt A-A

Saugseite

Druckseite

mindestens
eine SK

Schnitt A-A

Saugseite

Druckseite

mindestens
eine SK

## Fig.16

EP 2 228 542 B1

# Fluidzufuhrvorrichtung an HRO Typ A, (Darstellung Teil 3)

70% Cm Grenze

Saug-seite

A — A

VK

HK

Schnitt A-A

Saugseite

Druckseite

mindestens eine SK

70% Cm Grenze

Saug-seite

A — A

VK

HK

Schnitt A-A

Saugseite

Druckseite

mindestens eine SK

Fig.17

EP 2 228 542 B1

# Fluidzufuhrvorrichtungan HRO Typ A, (Darstellung Teil 4)

Fig.18

# Fluidzufuhrvorrichtung an HRO Typ A, (Darstellung Teil 5)

Oberflächenbündige
Konfiguration der
Fluidzufuhrvorrichtung

Fluidzufuhrvorrichtung
in Flachdüsen-
Konfiguration

0° – 30°

Saugseite

Druckseite

mindestens
eine SK

Saugseite

Druckseite

x

C

y

Bereich überhöhter,
konkaver Krümmung

EP 2 228 542 B1

## Fig.19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5690473 A
- US 6334753 B
- US 2870957 A
- US 2933238 A
- US 5480284 A
- EP 1118747 A

- US 3934410 A
- FR 1318602 A
- FR 1263010 A
- US 3009630 A
- GB 843979 A